# EUROPÄISCHE PATENTSCHRIFT

(11) **EP 1 300 323 B1**
(45) Veröffentlichungstag und Bekanntmachung des Hinweises auf die Patenterteilung: **23.02.2005**
(21) Anmeldenummer: 02020352.7
(22) Anmeldetag: 12.09.2002
(51) Int. Cl.: B62D 25/10, B62D 21/15, B60R 21/34

(54) **Grossflächiges Karrosserieelement eines Kraftfahrzeuges**
Vehicle body element with a large surface
Elément de carrosserie de véhicule à section large

(30) Priorität: 05.10.2001 DE 10149116
(43) Veröffentlichungstag der Anmeldung: 09.04.2003
(73) Patentinhaber: DaimlerChrysler AG, 70567 Stuttgart (DE)
(72) Erfinder: Brown, Garry, CV 10 9TF Nuneaton (GB); Frank, Thomas, 70619 Stuttgart (DE); Rathje, Klaus, 71157 Hildrizhausen (DE); Tomlin, Oliver, LE10 3LW Leicestershire (GB); Ziegs, Maya, 72119 Ammerbuch (DE)

(56) Entgegenhaltungen:
- DE-A- 2 934 430
- DE-U- 7 822 020
- US-B1- 6 220 653
- PATENT ABSTRACTS OF JAPAN vol. 1999, no. 12, 29. Oktober 1999 (1999-10-29) -& JP 11 198861 A (NISSAN MOTOR CO LTD), 27. Juli 1999 (1999-07-27)
- PATENT ABSTRACTS OF JAPAN vol. 1997, no. 03, 31. März 1997 (1997-03-31) -& JP 08 310450 A (HONDA MOTOR CO LTD), 26. November 1996 (1996-11-26)

## Beschreibung

Die Erfindung betrifft einen vorderen randseitigen Verformungsbereich einer Motor- oder Fronthaube eines Kraftfahrzeuges oder Personenkraftwagens mit großflächigem, dünnwandigem, biegeweichem Außenteil und innenseitiger Versteifungsstruktur, wobei die Haube ein entfernt von ihrem vorderen Rand angeordnetes randseitiges Rahmenquerglied aufweist und das Außenteil im Bereich dieses Randes ein zur Karosserieinnenseite offenes U- oder V-Profil bildet, dessen äußerer einer Schenkel als Teil der Karosserieaußenseite und dessen innerer anderer Schenkel als Anschluss an das Rahmenquerglied ausgebildet ist.

Ein derartiger, die Merkmale des Oberbegriffs des Anspruchs 1 offenbarender Verformungsbereich wird in Patent Abstracts of Japan Vol. 1997, Nr. 03, 31. März 1997 zu JP 08 310450 A dargestellt. Das Rahmenquerglied ist als in Rückwärtsrichtung des Fahrzeuges nach schräg unten geöffnetes V-Profil ausgebildet, dessen nach abwärts weisender Schenkel unter Bildung eines nach vorwärts, schräg aufwärts geöffneten weiteren V-Profiles mit dem inneren Schenkel des Außenteiles verbunden ist, und dessen nach schräg aufwärts gerichteter anderer Schenkel sich dicht unter der Karosserieaußenseite erstreckt und über ein Winkelprofil mit der Karosserieaußenseite verbunden ist. Außerdem sind an den voneinander entfernten Rändern des V-Profiles versteifende U-Profile angeordnet. Bei einer Kollision mit einem Fußgänger kann zwar der vordere Rand der Fronthaube nachgeben, jedoch besteht gleichwohl eine erhebliche Verletzungsgefahr, weil Versteifungsteile dicht unterhalb der Außenseite der Haube vorgesehen sind.

Eine in der DE 25 58 332 A1 dargestellte Haube eines Kraftfahrzeuges besteht im wesentlichen aus einem vergleichsweise schwach gewölbten Außenblech, welches randseitig mit einem innenseitig umlaufenden Rahmen verbunden ist, dessen Rahmenteile als hutprofilartige Träger ausgebildet sind. Dabei ist die Innenseite des Außenbleches stoffschlüssig mit den Flanschen des Hutprofiles verbunden, so dass der Mittelbereich des Hutprofiles zwischen dessen Flanschen zusammen mit dem diesen Bereich überdeckenden Teil des Außenbleches ein rohrförmig geschlossenes Profil bildet. Darüber hinaus ist das Außenblech an den Rändern des Karosserieteiles um den randseitigen Flansch des Hutprofiles U-förmig umgeschlagen, so dass der vorgenannte Flansch entsprechend verstärkt und zusätzlich eine formschlüssige Verbindung zwischen dem Außenblech und dem innenseitigen Rahmen geschaffen wird. Um einerseits eine gewichtssparende Ausbildung des Karosserieteiles und andererseits eine hinreichende Biegesteifigkeit der Mittelzone des Karosserieteiles gewährleisten zu können, ist das Außenblech innenseitig durch ein flächiges Element versteift. Dieses kann in Form eines aus Draht oder durch Stanzung eines Metallteiles hergestellten Gitters ausgebildet und mit dem Außenblech verklebt sein.

Aus der DE 199 29 048 A1 ist ein ähnliches Karosserieelement bekannt, welches als Motorhaube eines Kraftfahrzeuges ausgebildet ist. Hier ist wiederum ein dünnwandiges Außenblech, dessen Oberseite eine Oberfläche der Karosserie bildet, mit einem rahmenartigen Innenblech verbunden, dessen Außenrandkontur weitestgehend mit der Außenrandkontur des Außenbleches übereinstimmt, so dass Außenblech und Innenblech durch Bördeln und/oder Schweißpunkte oder Schweißlinien miteinander verbunden werden können. Innerhalb der Rahmenöffnung des Innenbleches ist ein zur Dämpfung von Schwingungen des Außenbleches dienendes Schaumstoffteil angeordnet, welches vorzugsweise vollflächig an der Innenseite des Außenbleches anliegt und dementsprechend an die Wölbung des Außenbleches angepasst ist. Auf diese Weise wird einerseits eine Dämpfung von Karosseriegeräuschen ermöglicht. Andererseits kann das Karosserieelement aufprallweich ausgebildet sein.

In Patent Abstracts of Japan Vol. 1999, Nr. 12, 29. Oktober 1999 zu JP 11 198861 A wird die Ausbildung eines an einen seitlichen Kotflügel unter Bildung einer Fuge anschließenden Längsseitenrandes einer Haube eines Kraftfahrzeuges dargestellt. Hier bildet das Haubenaußenteil im Bereich des Längsrandes ein zur Karosserieinnenseite offenes V-Profil, dessen innerer Schenkel entfernt vom Längsseitenrand der Haube unter Bildung eines nach abwärts gerichteten Steges abgewinkelt ist. Dieser Steg ist als Doppelblechsteg ausgebildet, indem auf der vom Haubenrand angewandten Seite des Steges der Schenkel eines Winkelprofiles aufliegend angeordnet ist. Das freie untere Ende des Doppelblechsteges trägt eine Kunststoffummantelung, mit der sich der Doppelblechsteg bei übermäßiger Belastung der Haube auf einer Stützfläche eines den Kotflügel bildenden Profilbleches auflegt, wobei sich der Doppelblechsteg bei nochmals erhöhter Belastung der Haube verformt, so dass die Haube erheblich in Abwärtsrichtung nachgeben kann.

Die DE 78 22 020 U1 zeigt die Ausbildung einer Kofferraumklappe, bei der im Bereich des Kofferraumschlosses eine hohe Steifigkeit gewährleistet sein soll, um ein Aufbrechen des Kofferraums zu verhindern. Außerdem soll gewährleistet sein, dass sich die Kofferraumklappe nicht verformen kann, wenn sie von außen mit großer Kraft niedergedrückt wird, um den Kofferraum zu schließen.

In der DE 29 34 430 A1 wird eine im wesentlichen als Sandwich-Platte ausgebildete Haube dargestellt. Dabei besitzt die Sandwich-Platte eine äußere und eine innere Deckschicht sowie einen dazwischen angeordneten Schaumstoffkern. Im Bereich eines inneren Verstärkungsteiles ist die untere Deckschicht ausgespart, so dass das Verstärkungsteil unmittelbar mit dem Kern verbunden ist, wobei an die ausgesparte innere Deckschicht eine innere Deckschicht des Verstärkungsteiles anschließen kann.

Aus der DE 35 46 050 A1 ist ein als Kunststoffbauteil ausgebildetes stoßaufnehmendes Karosserieaußenteil für Kraftfahrzeuge bekannt. Dabei ist das Karosserieteil als doppelwandiges Kunststoffbauteil ausgebildet, wobei der Abstandsraum zwischen den beiden Wänden durch einen Kern aus Papierstegen, Waben oder Hartschaum ausgefüllt wird. Mit Ausnahme von Sollbruchbereichen ist der Kern mit den Wänden des Karosserieteiles fest verbunden, z.B. durch Klebung.

Gemäß der EP 1 000 821 A2 kann eine Front- bzw. Karosseriehaube eines Kraftfahrzeuges als Verbundbauteil ausgebildet sein, welches im wesentlichen aus einem als Profilplatte ausgebildeten innenseitigen Haubenträger, einer auf dessen Außenseite angeordneten Zwischenschicht sowie einem darüber angeordneten, die Außenseite des Karosserieteiles bildenden Deckblech besteht, wobei ein Randbereich des Haubenteiles durch ein gesondertes, weiches Nasenteil gebildet wird. Auf diese Weise soll eine insgesamt aufprallweiche Haube geschaffen werden.

Die US 6,220,653 B1 zeigt für Kraftfahrzeuge vorgesehene Blechkomponenten, die gelochte Blechbereiche mit unterschiedlich eng angeordneten Löchern aufweisen, um Bereiche mit unterschiedlicher Nachgiebigkeit zu schaffen.

Aufgabe der Erfindung ist es, eine aufprallweiche Motor- bzw. Fronthaube zu schaffen, die als herkömmliches Blechteil herstellbar ist und einerseits die gewünschte Nachgiebigkeit und andererseits eine hinreichende Belastbarkeit beim Öffnen der Haube aufweist.

Diese Aufgabe wird dadurch gelöst, dass das von der Haubenaußenseite entkoppelt und nach innen versetzt angeordnete Rahmenquerglied mit dem inneren anderen Schenkel ein stumpfwinkliges V-Profil mit V-Öffnung zur Karosserieaußenseite hin bildet.

Die Erfindung beruht auf dem allgemeinen Gedanken, aufprallweiche Randzonen des Karosserieteiles dadurch zu gewährleisten, dass randseitig einerseits eine für den Aufprall eines Kopfes eines Menschen optimierte verformbare Struktur und andererseits eine davon entkoppelte Tragstruktur zur Gewährleistung der Steifigkeit des Karosserieteils vorgesehen sind.

Bei der Erfindung wird in Richtung des Vorderrandes der Haube ein über das Rahmenquerglied hinausragender Wulst und innerhalb des Wulstes ein Abstandsraum zwischen Rahmenquerglied und Karosserieaußenseite geschaffen, so dass das Außenteil einerseits senkrecht zur Außenoberfläche in Richtung des Rahmenquergliedes und andererseits auch in Richtungen tangential zur Karosserieaußenseite, in Fahrzeuglängsrichtung nach rückwärts nachgeben kann.

Weiterhin ist vorteilhaft, dass der vorgenannte Wulst an seinem an den Tragrahmen anschließenden Schenkel von einer den Rand des Karosserieteiles umgreifenden Hand ohne Gefahr einer Verformung untergriffen werden kann, wenn die Haube geöffnet werden soll. In diesem Zusammenhang ist besonders vorteilhaft, dass das Rahmenquerglied mit dem inneren anderen Schenkel ein stumpfwinkliges V-Profil mit V-Öffnung zur Karosserieaußenseite bildet.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher erläutert wird.

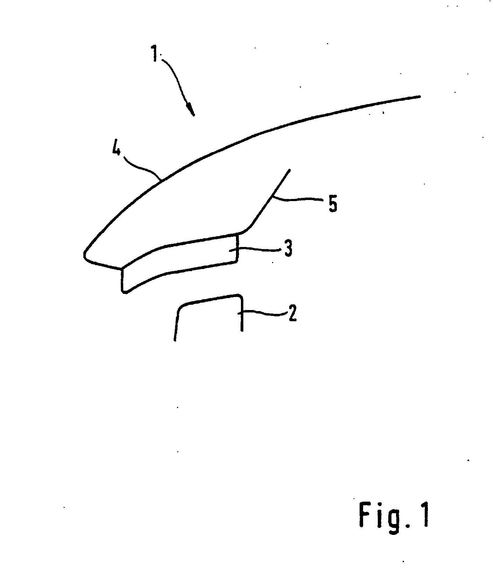

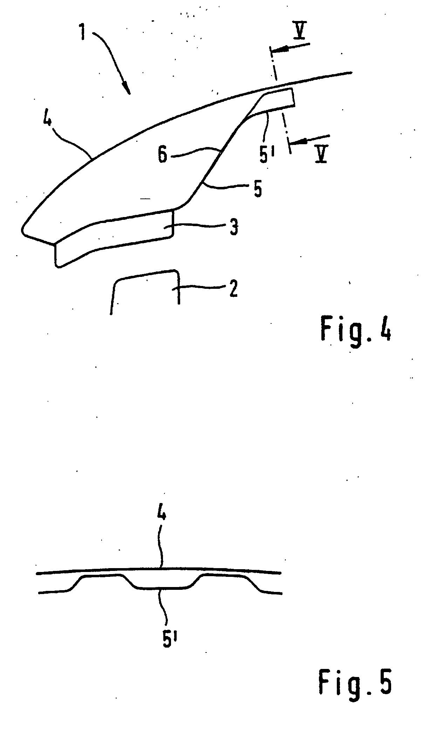

Dabei zeigen die Fig. 1 bis 4 schematisierte Schnittbilder des Frontbereiches eines erfindungsgemäßen Vorderhaubenteiles und die Fig. 5 ein Schnittbild entsprechend der Schnittlinie V-V in Fig. 4.

Gemäß der Fig. 1 lässt sich der vordere Teil einer Fronthaube 1 in grundsätzlich bekannter Weise, gegebenenfalls unter Zwischenschaltung nicht dargestellter Federn, auf ein Zargenteil 2 der Karosserie eines ebenfalls nicht dargestellten Personenkraftwagens auflegen.

Als haubenseitiges Auflagerteil ist ein haubenseitiges Tragstrukturteil 3, beispielsweise in Form eines Rahmenquergliedes, vorgesehen, welches entkoppelt von einem die Haubenaußenseite bildenden Außenteil 4 bzw. einer das Außenteil 4 bildenden Beplankung angeordnet ist: Dazu besitzt das in üblicher Karosserietechnik aus Blech hergestellte Außenteil 4 im Bereich des vorderen Randes der Fronthaube 1 einen U-förmigen, gegebenenfalls auch V-ähnlichen Querschnitt, derart, dass ein über das Tragstrukturteil 3 nach vorne deutlich hinausragender Wulst gebildet wird, wobei der eine U- bzw. V-Schenkel des Wulstes die Außen- bzw. Oberseite der Fronthaube 1 bildet und der andere U- bzw. V-Schenkel an das Tragstrukturteil 3 fest anschließt bzw. angebunden ist.

Das U- bzw. V-Profil ist zur Innenseite des Fronthaube 1 hin bzw. in Rückwärtsrichtung des Fahrzeuges geöffnet, d.h. das U- bzw. V-Profil bildet zusammen mit dem an den unteren Schenkel anschließenden Tragstrukturteil 3 ein einseitig offendes "Halbrohr".

Der untere Schenkel des U- bzw. V-Profils bildet mit dem anschließenden Bereich des Tragstrukturteils 3 eine nach oben geöffnete Rinne mit stumpfwinkligem U-Profil. Dadurch wird insbesondere bei einem bogenförmigen Tragstrukturteil 3 die Steifigkeit des Verbundes der beiden Teile erhöht. Der untere Schenkel kann somit ohne Gefahr einer Verformung von einer Hand zum Öffnen der Haube 1 untergriffen werden.

Gegebenenfalls kann noch am in Rückwärtsrichtung des Fahrzeuges weisenden Rand des Tragstrukturteiles 3 ein nachgiebiges Stützteil bzw. -blech 5 angeordnet sein, dessen freier Rand nach schräg oben gerichtet, jedoch vom darüber erstreckten Außenteil 4 beabstandet ist.

Falls bei einem Unfall des Fahrzeuges ein Fußgänger gegen bzw. auf die Fronthaube 1 fällt, kann das Außenteil 4 unter energieabsorbierender Biegeverformung in Fahrzeuglängsrichtung nach rückwärts sowie nach unten nachgeben, ohne dass der Fußgänger mit dem Tragstrukturteil 3 kollidiert.

Bei entsprechend starker Verbiegung des Außenteiles 4 stützt sich dieses auf dem biegefähigen Stützteil bzw. -blech 5 ab, so dass eine gewünschte Progressivität des Verformungswiderstandes des Außenteiles 4 gewährt wird.

Gegebenenfalls kann hierzu auch vorgesehen sein, den Raum zwischen dem Außenteil 4 und der Oberseite des Tragstrukturteiles 3 bzw. des Stützteiles oder -bleches 5 zumindest teilweise mit einem komprimierbaren Schaumstoff od.dgl. ausfüllen oder auszuspritzen.

Das Tragstrukturteil 3 kann grundsätzlich beliebig ausgebildet sein, z.B. als Blech-Profilteil oder als Strangpreßprofil.

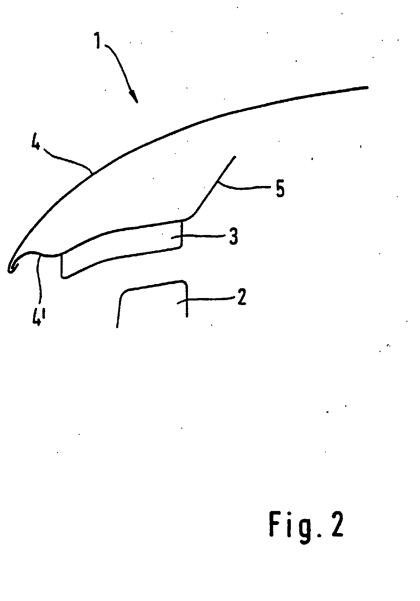

Die Ausführungsform der Fig. 2 unterscheidet sich von der Ausführungsform der Fig. 1 vor allem dadurch, dass das Außenteil 4 über einen Falz mit einem das Außenteil 4 an das Tragstrukturteil 3 anbindenden Anschlußblechteil 4' verbunden ist, welches einen im wesentlichen S-förmigen Querschnitt aufweist, derart, dass das Außenteil 4 und das Anschlußblechteil 4' gemeinsam einen über den in Fig. 2 linken Rand des Strukturteiles 3 hinausragenden hohlen Wulst bilden. Damit kann wiederum der Vorderbereich der Fronthaube 1 nach rückwärts sowie nach unten nachgeben. Die Falzebene liegt vorzugsweise etwa quer zu der bei Kollisionen des Fahrzeuges mit Fußgängern zu erwartenden Aufschlagrichtung.

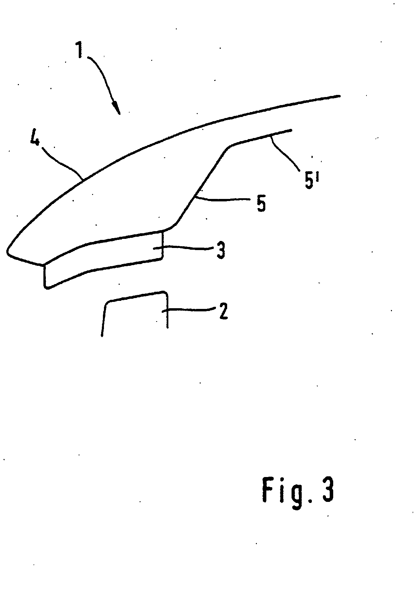

Das Beispiel der Fig. 3 zeigt, dass das Stützteil bzw. -blech 5 einen zum Außenteil 4 im wesentlichen parallelen Fortsatz 5' aufweisen kann, welcher bei Verformung des Außenteiles 4 nach abwärts als Abstützfläche wirkt und aufgrund seines vertikalen Abstandes vom Außenteil erst nach einer vorgegebenen Anfangsverformung des Außenteiles als zusätzliche energieabsorbierend verbiegbare Auffangfläche wirksam wird.

In Fig. 4 ist beispielhaft dargestellt, dass das Stützteil bzw. -blech 5 im Bereich einer besonders biegenachgiebigen Zone mit Öffnungen 6 versehen sein kann, um die Steifigkeit des Bleches 5 in der bzw. einer Biegezone zu vermindern.

Das Schnittbild der Fig. 5 zeigt, dass der Stützflächenabschnitt 5' eine wellenartige Form aufweisen kann, derart, dass dieser Abschnitt bereichsweise eng benachbart zum Außenteil 4 und bereichsweise weiter entfernt vom Außenteil 4 erstreckt ist.

Das Außenteil 4 und das Tragstrukturteil 3 können aus gleichen oder unterschiedlichen Materialien bestehen, z.B. Stahl und/oder Aluminium.

## Patentansprüche

1. Vorderer randseitiger Verformungsbereich einer Motor- oder Fronthaube (1) eines Kraftfahrzeuges oder Personenkraftwagens mit großflächigem, dünnwandigem, biegeweichem Außenteil (4) und innenseitiger Versteifungsstruktur, wobei die Haube (1) ein entfernt von ihrem vorderen Rand angeordnetes randseitiges Rahmenquerglied (3) aufweist und das Außenteil (4) im Bereich dieses Randes ein zur Karosserieinnenseite offenes U- oder V-Profil bildet, dessen äußerer einer Schenkel als Teil der Karosserieaußenseite und dessen innerer anderer Schenkel (4') als Anschluss an das Rahmenquerglied (3) ausgebildet ist,
**dadurch gekennzeichnet,**
**dass** das von der Haubenaußenseite entkoppelt und nach innen versetzt angeordnete Rahmenquerglied (3) mit dem anderen inneren Schenkel (4') ein stumpfwinkliges V-Profil mit V-Öffnung zur Karosserieaußenseite hin bildet.

2. Verformungsbereich nach Anspruch 1,
**dadurch gekennzeichnet,**
**dass** der Übergang zwischen den beiden Schenkeln (4,4') als V-förmig profilierter Knick mit geringem Krümmungsradius ausgebildet ist.

3. Verformungsbereich nach Anspruch 1 oder 2,
**dadurch gekennzeichnet,**
**dass** das Rahmenquerglied (3) zumindest bereichsweise rohrähnlich geschlossenes Profil aufweist.

4. Verformungsbereich nach einem der Ansprüche 1 bis 3,
**dadurch gekennzeichnet,**
**dass** am Rahmenquerglied (3) ein energieabsorbierend verformbares Stützteil oder -blech (5) angeordnet ist, auf das sich das Außenteil (4) bei entsprechender Verformung auflegt.

5. Verformungsbereich nach Anspruch 4,
**dadurch gekennzeichnet,**
**dass** der freie Rand des Stützteiles bzw. -bleches (5) nach schräg oben gerichtet, jedoch vom darüber erstreckten Außenteil (4) beabstandet ist.

## Claims

1. Front edge-side deformation region of an engine or front bonnet (1) of a motor vehicle or passenger car with a large-surfaced, thin-walled bendable outer part (4) and an inner stiffening structure, the bonnet (1) having a frame transverse member (3) disposed on the edge-side at a distance apart from its front edge, and the outer part (4) forms a U-shape or V-shape in the region of this edge which is open towards the bodywork interior, an outer leg of which is designed as part of the bodywork exterior and the other inner leg (4') of which is designed as a connection to the frame transverse member (3),
**characterised in that**
the frame transverse member (3), which is uncoupled from the bonnet exterior and disposed offset towards the interior, forms an obtuse-angled V-shape or V-opening towards the bodywork exterior in conjunction with the other leg (4').

2. Deformation region as claimed in claim 1,
**characterised in that**
the transition between the two legs (4, 4') is designed as a V-shaped kink with a slight radius of curvature.

3. Deformation region as claimed in claim 1 or 2,
**characterised in that**
the frame transverse member (3) has a tube-like closed profile, at least in certain regions.

4. Deformation region as claimed in one of claims 1 to 3,
**characterised in that**
an energy-absorbing deformable support part or support panel (5) is provided on the frame transverse member (3), on which the outer part (4) sits when deformed accordingly.

5. Deformation region as claimed in claim 4,
**characterised in that**
the free edge of the support part or support panel (5) is directed upwards at an angle but is spaced apart from the outer part (4) extending above it.

## Revendications

1. Zone de déformation côté bord avant d'un capot de moteur ou frontal (1) d'un véhicule automobile ou d'une voiture comprenant une partie extérieure (4) à grande surface, à paroi mince, souple à la flexion, et une structure de renfort côté intérieur, le capot (1) comprenant un élément transversal de châssis (3) côté bord disposé en étant éloigné de son bord avant et la partie extérieure (4) formant dans la zone de ce bord un profilé en U ou en V ouvert en direction du côté intérieur de la carrosserie, profilé dont une branche extérieure est conçue comme une partie du côté extérieur de la carrosserie et dont l'autre branche intérieure (4') est conçue comme un raccord à l'élément transversal de châssis (3), **caractérisée en ce que** l'élément transversal de châssis (3), disposé en étant décalé vers l'intérieur et découplé du côté extérieur du capot, forme avec l'autre branche intérieure (4') un profilé en V à angle obtus comprenant une ouverture en V en direction du côté extérieur de la carrosserie.

2. Zone de déformation selon la revendication 1, **caractérisée en ce que** le passage entre les deux branches (4, 4') est conçu comme une grosseur profilée en forme de V comprenant un rayon de courbure réduit.

3. Zone de déformation selon la revendication 1 ou 2, **caractérisée en ce que** l'élément transversal de châssis (3) comprend un profilé fermé au moins par zones, de façon semblable à un tuyau.

4. Zone de déformation selon l'une des revendications 1 à 3, **caractérisée en ce qu'**une partie ou une tôle de support (5) pouvant être déformée en absorbant de l'énergie est disposée sur l'élément transversal de châssis (3), partie ou tôle sur laquelle repose la partie extérieure (4) à l'occasion d'une déformation correspondante.

5. Zone de déformation selon la revendication 4, **caractérisée en ce que** le bord libre de la partie ou de la tôle de support (5) est orienté de façon oblique vers le haut, mais est écarté de la partie extérieure (4) étendue au-dessus de celui-ci.
